(19) Europäisches Patentamt
European Patent Office
Office européen des brevets

(11) Veröffentlichungsnummer: **0 181 523**
**B1**

(12) # EUROPÄISCHE PATENTSCHRIFT

(45) Veröffentlichungstag der Patentschrift: **28.06.89**

(51) Int. Cl.$^4$: **C 08 G 81/02**

(21) Anmeldenummer: **85113224.1**

(22) Anmeldetag: **18.10.85**

(54) **Verfahren zur Herstellung von Polyphenylenether enthaltenden Polymeren und deren Verwendung zur Herstellung von Polymermischungen und Formkörpern.**

(30) Priorität: **30.10.84 DE 3439604**

(43) Veröffentlichungstag der Anmeldung: **21.05.86 Patentblatt 86/21**

(45) Bekanntmachung des Hinweises auf die Patenterteilung: **28.06.89 Patentblatt 89/26**

(84) Benannte Vertragsstaaten: **BE DE FR GB IT**

(56) Entgegenhaltungen:
**EP-A- 0 001 879**
**EP-A- 0 017 751**
**EP-A- 0 172 516**

(73) Patentinhaber: **BASF Aktiengesellschaft**
**Carl-Bosch-Strasse 38**
**D-6700 Ludwigshafen (DE)**

(72) Erfinder: **Taubitz, Christof, Dr.**
**In der Dreispitz 15**
**D-6706 Wachenheim (DE)**
Erfinder: **Seiler, Erhard, Dr.**
**Erpolzheimer Strasse 1**
**D-6700 Ludwigshafen (DE)**
Erfinder: **Hambrecht, Juergen, Dr.**
**Werderstrasse 30**
**D-6900 Heidelberg (DE)**
Erfinder: **Blinne, Gerd, Dr.**
**Im Woogtal 7**
**D-6719 Bobenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Herstellung von Polymeren mit Durchschnittsmolekulargewichten (Gewichtsmittel $M_w$) von 5 000 bis 2 000 000, die Struktureinheiten der allgemeinen Formel (I)

$$\begin{array}{l} -CH_2-CR^1- \\ \quad\quad\;\; | \\ \quad\quad\; Ar-(CH_2-O-PPE)_n \end{array} \qquad (I)$$

einpolymerisiert enthalten, worin $R^1$ = H oder ein $C_1$- bis $C_8$-Alkylrest, Ar = ein gegebenenfalls mit Alkyl- oder Arylresten substituierter aromatischer Rest mit 6 bis 14 C-Atomen, PPE = ein gegebenenfalls substituierter Poly(phenylenether) rest mit $M_w$ von 1 000 bis 90 000 und n = eine ganze Zahl von 1 bis 3 bedeuten.

Bei derartigen Polymeren handelt es sich um makromolekulare Stoffe, bei denen an eine polymere Hauptkette Poly(phenylenether) über ein endständiges Sauerstoffatom und bevorzugt über eine Benzylgruppe gebunden ist. Die Herstellung von derartigen Polymeren bietet Möglichkeiten zur Verbesserung des Eigenschaftsbildes von Kunststoffen ohne Änderung der Monomerenzusammensetzung.

Homopolymerisate, welche nur aus der oben angeführten Struktureinheit (I) bestehen, sind bereits in der Literaturstelle « Polymer Bulletin » 10, (1983), Seiten 397 bis 403 beschrieben. Es sind auch bereits Copolymere bekannt, die neben der Struktureinheit (I) noch Struktureinheiten der allgemeinen Formel $—CH_2—CR^1—CN$ enthalten, wobei $R^1$ = H oder ein $C_1$- bis $C_8$-Alkylrest (vgl. EP-A-172 516, veröffentlicht 26.2.1986). Die bekannten Polymeren werden durch Zweiphasenreaktion hergestellt, indem eine $Ar—CH_2—Cl$-Seitenkette mit einem Poly(phenylenether) in einem organischen Lösungsmittel, welches mit Wasser nicht mischbar ist, unter zusätzlicher Verwendung eines Tetraalkylammoniumsalzes umgesetzt wird, wobei man es unter starkem Rühren mit wäßriger Natronlauge in Kontakt bringt.

Nachteilig an diesem bekannten Verfahrens ist, daß die wäßrige Phase von der Reaktionslösung abgetrennt und die organische Phase durch sorgfältiges Waschen von der restlichen Lauge und dem Ammoniumsalz befreit werden muß. Die erhaltenen Polymeren neigen außerdem leicht zur Vergilbung. Die bekannte Phasen-Transfer-Reaktion wird bei Temperaturen unter 40 °C ausgeführt. Dies ist für eine technische Ausführung zusätzlich nachteilig, da die zur Reaktion gebrachten Polymeren wegen der Löslichkeit und der Viskosität der Lösung nur in geringer Konzentration eingesetzt werden können.

Aufgabe der vorliegenden Erfindung war es, ein technisch einfach zu realisierendes Verfahren zur Herstellung von (I) enthaltenden Polymeren mit Poly(phenylenether) als Seitenketten aufzufinden, welche die oben erwähnten Nachteile nicht aufweisen.

Diese Aufgabe wurde durch das erfindungsgemäße Verfahren gemäß Patentansprüchen 1 bis 4 gelöst.

Die Polymeren der allgemeinen Formel (I) weisen Durchschnittmolekulargewichte (Gewichtsmittel $M_w$) von 5 000 bis 2 000 000, bevorzugt 20 000 bis 300 000 auf, wobei das Molekulargewicht jeweils gemessen wurde durch Gelpermeations-Chromatographie in 0,25 gewichtsprozentiger Tetrahydrofuranlösung bei 23 °C und einer Durchflußgeschwindigkeit von 1,2 ml/min (vgl. G. Glöckner « Polymercharakterisierung durch Flüssigkeits-Chromatographie », Verlag A. Hüttig, Heidelberg, 1982).

Die Polymeren enthalten Struktureinheiten bzw. Strukturelemente der eingangs gekennzeichneten allgemeinen Formel (I) einpolymerisiert. Es handelt sich bei den Polymeren um makromolekulare Stoffe, die ganz oder im wesentlichen oder teilweise aus wiederkehrenden Einheiten der Formel (I) bestehen, worin der Formelteil $[—CH_2—CR^1—]$ ein Teil der Polymerkette ist. Die Polymeren enthalten in den Seitenketten als Substituenten die $—Ar(—CH_2—O—PPO)_n$-Reste. Die Polymeren bestehen entweder aus Homopolymeren mit der oben angeführte Struktureinheit (I) oder aus Copolymeren, die neben der Struktureinheit (I) noch andere Strukturelemente enthalten, die sich von anderen copolymerisierbaren olefinisch ungesättigten Verbindungen ableiten. Alle einpolymerisierten Struktureinheiten können statistisch, d. h. beliebig über die Hauptkette verteilt, alternierend und/oder blockartig im Copolymeren der Hauptkette verteilt sein. Derartige Anordnungen von Monomereinheiten in Copolymeren sind an sich bekannt, so daß sich eine weitere Erläuterung erübrigt.

In der Struktureinheit der allgemeinen Formel (I) :

$$\begin{array}{l} -CH_2-CR^1- \\ \quad\quad\;\; | \\ \quad\quad\; Ar-(CH_2-O-PPE)_n \end{array} \qquad (I)$$

bedeutet $R^1$ Wasserstoff oder ein $C_1$- bis $C_8$-Rest, bevorzugt Wasserstoff oder ein Methyllrest. Der Formelteil Ar bedeutet ein gegebenenfalls mit Alkyl- und/oder Arylresten substituierter aromatischer Rest mit 6 bis 14 C-atomen, wobei ein Phenylenrest bevorzugt ist. Als gegebenenfalls alkylierte und/oder arylierte aromatische Reste kommen insbesondere solche der allgemeinen Formel :

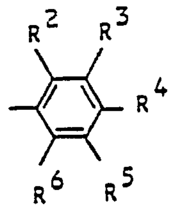

in Betracht, wobei $R^2$, $R^3$, $R^4$, $R^5$ und $R^6$ bevorzugt Wasserstoff, Methyl, Ethyl oder Phenyl ist und mindestens ein Rest, höchstens aber drei Reste, die allgemeine Formel $-CH_2-O-$PPE haben. Bevorzugt sind ein oder zwei PPE$-O-CH_2$-Reste im aromatischen Rest Ar vorhanden. Der in der Seitenkette der Struktureinheit (I) befindliche Formelteil O—PPE bedeutet dabei ein Poly(phenylenether)rest. Die Poly(phenylenether) werden nach den bekannten Verfahren aus den entsprechenden Phenolen durch oxidative Kupplung hergestellt (vgl. US-Patente 3 306 879, 3 914 266, 3 956 442, 2 965 069, 3 972 851, 3 496 236, 3 367 978 und 4 140 675).

Bevorzugte Poly(phenylenether) haben die allgemeine Formel :

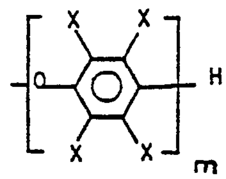

wobei m eine positive Zahl, vorzugsweise von 20 bis 600, und X ein monovalenter Substituent wie Wasserstoff, Halogen, Kohlenwasserstoff oder Halogenkohlenwasserstoff mit mindestens 2 Kohlenstoffatomen zwischen dem Halogenatom und dem Phenylenkern ist. Das Molekulargewicht (Gewichtsmittel $M_w$) des Polyphenylenetherrestes beträgt, bestimmt nach der oben angegebenen Methode, 1 000 bis 90 000, bevorzugt 10 000 bis 70 000.

Die Seitenketten bestehen bevorzugt aus :

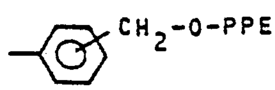

wobei für PPE beispielhaft genannt seien :

Poly(2,5-dilauryl-1,4-phenylenether), Poly(2,6-diphenyl-1,4-phenylenether), Poly(2,6-dimethoxy-1,4-phenylenether), Poly(2,6-diethoxy-1,4-polyphenylenether), Poly(2-methoxy-6-ethoxy-1,4-phenylenether), Poly(2-ethyl-6-stearyloxy-1,4-phenylether), Poly(2,6-dichlor-1,4-phenylenether), Poly(2-methyl-6-phenyl-1,4-phenylenther), Poly(2,6-dibenzyl-1,4-phenylenether), Poly(2-ethoxy-1,4-phenylenether), Poly(2-chlor-1,4-phenylenether), Poly(2,5-dibrom-1,4-phenylenether). Ebenfalls geeignet sind Copolymere von verschiedenen Phenolen, wie 2,6-Dimethylphenol und 2,3,6-Trimethylphenol. Besonders bevorzugt sind Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenther), Poly(2,6-dipropyl-1,4-phenylenether) und Poly(2-ethyl-6-propyl-1,4-phenylenther). Insbesondere bevorzugt sind Polymere, bei denen PPE ein Poly(2,6-dimethyl-1,4-phenylenether) und $R^1$ Wasserstoff ist.

Die Struktureinheit der allgemeinen Formel (I) ist in den Copolymeren bevorzugt in Mengen von 0,05 bis 30, besonders bevorzugt von 0,1 bis 10 Gewichtsprozent enthalten.

Neben den Struktureinheiten der allgemeinen Formel (I) können die Polymeren beliebige andere Struktureinheiten einpolymerisiert enthalten. Bevorzugt sind Copolymere, die neben den Struktureinheiten (I) noch zusätzlich die Streukturelemente enthalten, die sich von den Monomeren Acrylinitril, Methacrylnitril, Styrol und substituierten Styrolen, Styrolderivaten, Acrylsäureester, Methacrylsäureester, Acrylamide, Diene wie Butadien, Dimethylbutadien oder Isopren ableiten (vgl. deutsche Patentanmeldungen P 34 31 268 [EP-A1-172 516]) und P 34 02 791 [EP-A1-156 990].

Zur Herstellung der Polymeren werden erfindungsgemäß Polymere, die Struktureinheiten der allgemeinen Formel (II)

$$\begin{array}{l} -CH_2-\underset{|}{C}R^1- \\ \quad\;\; Ar-(CH_2-Cl)_n \end{array} \qquad (II)$$

einpolymerisiert enthalten, worin $R^1$, Ar und n die oben beschriebene Bedeutung haben, mit Poly(phenylenethern) umsetzt.

Das Polymere mit der Struktureinheit (II) kann ein Homopolymerisat, vorzugsweise jedoch ein Copolymerisat sein, das neben der Struktureinheit (II) noch andere Strukturelemente einpolymerisiert enthält, die sich von anderen copolymerisierbaren olefinisch ungesättigten Verbindungen ableiten. Solche Copolymerisate sind beispielsweise von M. Camps et al. im « Journal of Macromolecular Science, Reviews in Macromolecular Chemistry and Physics », Vol. C22 (3), Seiten 343 bis 407, (1982-83) beschrieben. Besonders bevorzugt sind Copolymere, die mit aprotischen, polaren lösungsmittel und Alkalicarbonat wenig, besonders bevorzugt nicht reagieren. Als Comonomere seien genannt: (Meth) acrylamid, (Meth)acrylnitril, Butadien, Isopren, Chloropren, Isobutylen, Styrol, α-Methylstyrol, o-, m-, p-Methylstyrol, Ethylstyrol, Methyl(meth)acrylat, Ethyl(meth)acrylat, i-Propyl(meth)acrylat, Butyl(meth)acrylat, Pentyl(methyl)acrylat, Hexyl(meth)acrylat, 2-Ethylhexyl(meth)acrylat, Dodecyl(meth)acrylat und die entsprechenden (Meth)acrylamide oder Gemische, die sich nach den dem Fachmann bekannten Regeln copolymerisieren lassen. Besonders bevorzugt sind Copolymerisate, die Styrol, p-Methylstyrol und Acrylnitril enthalten, im besonderen Gemische aus Styrol und Acrylnitril im Verhältnis 92 : 8 bis 60 : 40. Ein besonders bevorzugtes Copolymeres besteht aus 0,5 bis 10 Gew.% der Struktureinheit (II), 8 bis 40 Gew.% Acrylnitril und 50 bis 91,5 Gew.% Styrol, wobei sich die Prozentzahlen jeweils zu 100 addieren sollen.

Die oben genannten Monomeren werden mit dem Monomeren der Formel (III)

$$\begin{array}{l} CH_2{=}CR^1 \\ \quad | \\ \quad Ar{-}({-}CH_2{-}Cl)_n \end{array} \qquad \text{(III)}$$

copolymerisiert, wobei $R^1$, Ar und n die eingangs angegebene Bedeutung haben. Vorzugsweise ist (III) o-Chlormethylstyrol oder p-Chlormethylstyrol oder deren Gemische.

Die Polymeren können auch durch polymeranaloge Reaktion aus vinyltoluolhaltigen Monomeren hergestellt werden, wobei die $CH_3$-Gruppe in eine $CH_2Cl$-Gruppe umgewandelt wird, gemäß beispielsweise dem im US-Patent 2 694 702 beschriebenen Verfahren.

Die Anzahl der Äquivalente an Struktureinheiten (II) im Polymeren ist vorzugsweise gleich, im besonderen größer als die Äquivalente Hydroxylendgruppen im Poly(phenylenether).

Die Polymeren mit der Struktureinheit (II) werden mit Poly(phenylenethern) mit einer terminalen Hydroxylgruppe umgesetzt.

Nach dem erfindungsgemäßen Verfahren wird das Polymere mit der Struktureinheit (II) und der Poly(phenylenether) in einem aprotischen, polaren Lösungsmittel umgesetzt, wobei das Lösungsmittel einen Siedepunkt von größer als 60 °C, vorzugsweise oberhalb 100 °C, hat. Besonders genannt sind Lactame, N,N-Dialkylamide, wie Dimethylformamid, Dimethylsulfoxid, Sulfolan oder Cyclohexanon, besonders bevorzugt sind N-Methylpyrrolidon oder deren Gemische. Das polare, aprotische Lösungsmittel wird nach der Löslichkeit der Polymeren ausgesucht.

Die gesamte Lösungsmittelmenge wird so gewählt, daß die zur Reaktion gebrachten Polymeren oberhalb von 60 °C, vorzugsweise oberhalb von 100 °C weitgehend gelöst sind, vorzugsweise aber bei der Reaktionstemperatur gerade gelöst sind. Bei zu hoher Viskosität wird entsprechend verdünnter gearbeitet.

Nach dem erfindungsgemäßen Verfahren wird zusätzlich ein Alkalicarbonat eingesetzt. Es eignen sich $Li_2CO_3$, $Na_2CO_3$, $K_2CO_3$ oder Mischungen aus den Carbonaten, vorzugsweise $K_2CO_3$, oder Einsatzstoffe, aus denen die genannten Carbonate entstehen, wie ein Gemisch aus $NaHCO_3$ und NaOH. Die Carbonate werden vorzugsweise wasserfrei eingesetzt. Es ist vorteilhaft, das Carbonat möglichst feinkörnig zu verwenden. Die Äquivalente an eingesetzten Alkalicarbonat entsprechen mindestens den Äquivalenten an Hydroxylgruppen im Poly(phenylenether), vorzugsweise aber den Äquivalenten der Struktureinheit (I) oder mehr.

Das Polymere mit der Struktureinheit (II), der Poly(phenylenether) und das Alkalicarbonat werden in dem aprotischen, polaren Lösungsmittel oberhalb von 60 °C, vorzugsweise oberhalb von 100 °C, insbesondere zwischen 130 und 160 °C umgesetzt. Die Reihenfolge der Zugabe der Komponenten vor dem Abdestillieren ist nicht kritisch. Es kann vorteilhaft sein, zuerst die Polymeren zu lösen und diese durch Abdestillieren eines Teils des Lösungsmittels zu trocknen, bevor man das Alkalicarbonat zusetzt. Das Lösungsmittel. hat bevorzugt einen Siedepunkt von über 100 °C, insbesondere von über 130 °C. Nach dem erfindungsgemäßen Verfahren wird bevorzugt ein Teil des Lösungsmittels abdestilliert.

Die Reaktionszeit beträgt im allgemeinen bei 140 °C zwischen 1 und 24 Stunden im besonderen 2 bis 4 Stunden. Die gegebenenfalls abzudestillierende Menge Lösungsmittel und die Reaktionszeit wird durch Viskositätsmessung bestimmt, wobei die Viskosität mit dem Umsatz ansteigt.

Nach einer bevorzugten Ausführungsform des Verfahrens wird das Polymere mit der Struktureinheit (II), der Poly(phenylenther) und das Alkalicarbonat zusammen in dem aprotischen, polaren Lösungsmittel vorgelegt. Das Gemisch wird unter Rühren über den Siedepunkt des Lösungsmittels erhitzt und das Lösungsmittel abdestilliert. Entsprechend der kontinuierlich abdestillierten Menge Lösungsmittelmenge wird kontinuierlich Lösungsmittel zugesetzt. Es hat sich als besonders vorteilhaft herausgestellt, zusätzlich zu dem aprotischen, polaren Lösungsmittel ein wasserschleppendes, nicht polares Lösungsmittel mitzuverwenden. Dieses soll bevorzugt einen Siedepunkt oberhalb 100°, insbesondere oberhalb

125 °C aufweisen, das aprotische Lösungsmittel einen um vorzugsweise 25 °C höheren Siedepunkt. In einer besonders bevorzugten Ausführungsform benutzt man ein Gemisch aus Xylol und N-Methylpyrrolidon im bevorzugten Gewichtsverhältnis von 1 : 99 bis 95 : 5, im besonderen von 5 : 95 bis 45 : 55. Geeignete nicht polare Lösungsmittel sind noch Toluol oder Chlorbenzol. Im allgemeinen wird das zusätzlich zugegebene Lösungsmittel in Mengen unter 50 Gew.%, bezogen auf die gesamte Lösungsmittelmenge, eingesetzt. Dieses Verfahren ist bei temperaturempfindlichen Polymeren besonders vorteilhaft, man erreicht bei Gegenwart eines aprotischen, polaren Lösungsmittels niedrigere Temperaturen bei gutem Umsatz und hoher Polymerkonzentration im Lösungsmittel.

Zu der Mischung aus aprotischem, polarem Lösungsmittel und wasserschleppendem Lösungsmittel gibt man das Polymere mit der Struktureinheit (II), den Poly(phenylenether) und das Alkalicarbonat und destilliert das niedriger siedende, wasserschleppende Lösungsmittel unter sukzessivem Ersatz ab. Bei Reaktionsende wird das wasserschleppende Lösungsmittel ganz abdestilliert.

Enthält das Polymere mit den Struktureinheiten (II) mehr Äquivalente [an diesen Struktureinheiten (II)] als Äquivalente Hydroxylgruppen im Poly(phenylenether) vorhanden sind, ist es zweckmäßig, nach Reaktionsende einen höher als das Lösungsmittel siedenden Alkohol oder Phenol zuzusetzen und weiteres Lösungsmittel abzudestillieren, um alle Chlorethylgruppen umzusetzen und so ein chlorfreies Produkt zu erhalten. Die erhaltene Reaktionslösung wird nach üblichen Methoden, wie Fällen in Wasser oder Methanol aufgearbeitet. Bevorzugt ist es jedoch, das sich in der Lösung gebildete, feste Alkalichlorid und gegebenenfalls überschüssiges Alkalicarbonat heiß abzufiltrieren und dann die Lösung auf einem Extruder zu entgasen. Bei wasserlöslichen Lösungsmitteln kann das Gemisch ohne Abtrennung der Salze in Wasser gefällt werden.

Durch das erfindungsgemäße Verfahren erhält man sehr hohe Kopplungsausbeuten und die Polymeren sind weitgehend farblos. Nach dem Verfahren können die Polymeren in hoher Konzentration umgesetzt werden. Für die Durchmischung der Reaktionslösung muß ein wesentlich geringerer Aufwand getrieben werden als bei einer Zweiphasenreaktion, die Aufarbeitung ist einfach.

Die erhaltenen Produkte werden durch Umfällen gemäß US-Patent 3 644 227 charakterisiert. In Dichlormethan, $CH_2Cl_2$, ist das Styrol-Acrylnitril-Polymer = SAN löslich, das PPE bildet mit $CH_2Cl_2$ einen unlöslichen Komplex. Das erfindungsgemäße Pfropfcopolymere wird in $CH_2Cl_2$ zum Sieden erhitzt, bis sich gerade alles gelöst hat. Nach Abkühlen fällt der PPE-$CH_2Cl_2$-Komplex und PPE-reiches SAN aus. SAN und PPE-armes SAN bleiben in Lösung.

Die erfindungsgemäßen erhaltenen Polymeren können in der üblichen Weise modifiziert werden. Sie können daher z. B. Verstärkungs- und Füllstoffe, insbesondere Stabilisatoren, Gleit- und Flammschutzmittel sowie Farbstoffe und Pigmente enthalten. Als Verstärkungsmittel können z. B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Es ist ein Vorteil der (I) enthaltenden Polymeren, daß sie mit anderen Polymeren mischbar sind. Ein weiterer Vorteil besteht darin, daß sich die Polymeren und insbesondere deren Mischungen mit anderen Polymeren für die Verarbeitung durch Extrusion, Extrusionsblasen, Spritzgießen oder sonst üblichen Verarbeitungstechniken zu Folien oder anderen Formkörpern eignen.

Beispiel 1

Von einem Poly(-p-methylstyrol) ($M_w$ = 90 000) werden 5 Gew.% der Methylgruppen gemäß US-Patent 2 696 702 in Chlormethylgruppen umgesetzt. Man löst 100 g des Polymeren in 1 500 ml N-Methylpyrrolidon und 800 ml Toluol. Man destilliert 400 ml Toluol ab und setzt 100 g Poly(2,5-dimethyl-1,4-phenylenether), hergestellt gemäß US-PS 3 914 266 und mit einem Molekulargewicht $M_w$ = 37 000 und 12 g gemahlenes, wasserfreies $K_2CO_3$ zu. Man destilliert in 1,5 Stunden 3 mal 400 ml Toluol ab (132-142 °C), wobei man nach jedem Abdestillieren die entsprechende Menge Toluol wieder zugibt. Anschließend fällt man in Methanol.

Beispiel 2

Vergleichsversuch ohne das aprotische, polare Lösungsmittel

Der Versuch wird wie Beispiel 1 durchgeführt, man benutzt statt N-Methylpyrrolidon Toluol.

Beispiel 3

Durch kontinuierliche thermische Copolymerisation von 60,5 Gew.% Styrol, 35 Gew.% Acrylnitril, 3 Gew.% m-Chlormethylstyrol und 2 Gew.% p-Chlormethylstyrol stellt man unter Zusatz von 20 Teilen Ethylbenzol, bezogen auf 100 Teile Monomere, bei 150 °C und 7 bar bei 6 h Verweilzeit ein statistisch verteiltes Copolymeres mit $M_w$ = 32 000 her.

100 g des Copolymeren, 50 g Poly(2,6-dimethyl-1,4-phenylenether) gemäß Beispiel 1 und 10 g $K_2CO_3$ gibt man in 1 000 ml N-Methylpyrrolidon. Man destilliert 3 × 200 ml (unter entsprechender Zugabe) N-Methylpyrrolidon ab. Die Mischung wird heiß filtriert, die filtrierte Lösung in Wasser gefällt.

Beispiel 4

Vergleichsversuch zu Beispiel 3

Man verwendet statt N-Methylpyrrolidon Trimethylbenzol.

Beispiel 5

100 g des Copolymeren mit 60,5 Gew.% Styrol, 35 Gew.% Acrylnitril und 5 Gew.% Chlormethylstyrole (gemäß Beispiel 2) werden zusammen mit 20 g Poly(2,6-dimethyl-1,4-phenylenether (gemäß Beispiel 1), 6 g $K_2CO_3$ und 4 g $Na_2CO_3$ in 1 000 ml geschmolzenes Caprolactam gegeben. Man setzt 3 mal 200 ml Xylol zu, wobei man vor erneuter Zugabe jeweils das Xylol abdestilliert. Die von Xylol befreite Lösung wird heiß filtriert und in warmen Wasser gefällt.

Beispiel 6

Vergleichsversuch zu Beispiel 5

Man verwendet statt Caprolactam Xylol.

Beispiel 7

100 g des Copolymeren (gemäß Beispiel 2), 60 g Poly(2,6-dimethyl-1,4-phenylenether) (gemäß Beispiel 1, aber mit einem $M_w = 42\,000$) und 15 g $K_2CO_3$ werden in einer Mischung aus 200 N-Methylpyrrolidon, 300 g Cyclohexanon und 700 ml Xylol gelöst. Man destilliert 3 mal 300 ml Xylol unter entsprechender, laufender Zugabe von Xylol ab. Die verbleibende Mischung wird in Methanol gefällt.

Beispiel 8

Vergleichsversuch zu Beispiel 7

Man verwendet nur Xylol als Lösungsmittel.

Beispiel 9

Durch thermische kontinuierliche Copolymerisation von 64 Gew.% Styrol, 25 Gew.% Acrylnitril, 5 Gew.% Methylmethacrylat, 3,6 Gew.% m-Chlormethylstyrol und 2,4 Gew.% p-Chlormethylstyrol stellt man unter Zusatz von 20 Teilen Ethylbenzol, bezogen auf 100 Teile Monomere, bei 155 °C und 9 bar bei 6 h Verweilzeit ein statistisch verteiltes Copolymeres mit $M_w = 41\,000$ her.

100 g des Copolymeren, 100 g Poly-(2,6-dimethyl-1,4-phenylenether) (gemäß Beispiel 7) und 10 g $K_2CO_3$ werden in 1 600 g N-Methylpyrrolidon gegeben. Man destilliert 600 g N-Methylpyrrolidon bei vermindertem Druck und 140 °C Destillationstemperatur ab. Das heiße verbleibende Gemisch wird in Wasser gegeben.

Beispiel 10

Vergleichsbeispiel zu Beispiel 9

Man verwendet Xylol als Lösungsmittel und fällt im Methanol.

Die Polymeren der Beispiele 1 bis 10 werden durch Umfällen aus Methylendichlorid gemäß US-Patent 3 644 227 charakterisiert. Dabei bildet das nicht an das Styrolcopolymere gebundene PPE mit $CH_2Cl_2$ einen unlöslichen Komplex. Die ausgefallene Menge an PPE ist in Tabelle 1, Spalte 3, angegeben.

| Beispiel | Gew.-% PPE im Polymeren | Gew.-% PPE aus $CH_2Cl_2$-Fällung |
|---|---|---|
| 1 | 50 | 3,5 |
| 2 | 50 | 47,3 |
| 3 | 33,3 | 1,0 |
| 4 | 33,3 | 32,1 |
| 5 | 16,6 | 1,1 |
| 6 | 16,6 | 15,0 |
| 7 | 37,5 | 3,1 |
| 8 | 37,5 | 37,0 |
| 9 | 50 | 2,1 |
| 10 | 50 | 48,1 |

## Patentansprüche

1. Verfahren zur Herstellung von Polymeren mit Durchschnittsmolekulargewichten (Gewichtsmittel $M_w$) von 5 000 bis 2 000 000, die Struktureinheiten der allgemeinen Formel (I) :

$$\begin{array}{l} -CH_2-\underset{|}{C}R^1- \\ \quad\;\; Ar-(CH_2-O-PPE)_n \end{array} \qquad (I)$$

einpolymerisiert enthalten, worin $R^1$ = H oder ein $C_1$- bis $C_8$-Alkylrest, Ar = ein gegebenenfalls mit Alkyl- oder Arylresten substituierter aromatischer Rest mit 6 bis 14 C-Atomen, PPE = ein gegebenenfalls substituierter Poly(phenylenether)rest mit $M_w$ von 1 000 bis 90 000 und n = eine ganze Zahl von 1 bis 3, dadurch gekennzeichnet, daß Polymere, die Struktureinheiten der allgemeinen Formel (II) :

$$\begin{array}{l} -CH_2-\underset{|}{C}R^1- \\ \quad\;\; Ar-(CH_2-Cl)_n \end{array} \qquad (II)$$

einpolymerisiert enthalten, worin $R^1$, Ar und n die oben angegebene Bedeutung haben, mit terminale Hydroxylgruppen enthaltenden Poly(phenylenethern) unter Verwendung mindestens eines aprotischen, polaren Lösungsmittels, welches mit den Reaktanden nicht reagiert, und mindestens eines Alkalicarbonats bei Temperaturen oberhalb von 60 °C umgesetzt werden.

2. Verfahren nach Anspruch 1, dadurch gekennzeichnet, daß der PPE Poly(2,6-dimethyl-1,4-phenylenether), Ar Phenylen, $R^1$ Wasserstoff und n 1 ist.

3. Verfahren nach Anspruch 1, dadurch gekennzeichnet, daß das Lösungsmittel N-Methylpyrrolidon ist.

4. Verfahren nach Anspruch 1, dadurch gekennzeichnet, daß bei Temperaturen oberhalb 100 °C umgesetzt wird.

5. Verwendung der nach Anspruch 1 erhaltenen Polymeren (I) zur Herstellung von Mischungen mit anderen Polymeren,
mit der Maßgabe, daß (I) keine Struktureinheiten der Formel

$$\begin{array}{l} -CH_2-\underset{|}{C}HR- \\ \qquad\;\; CN \end{array}$$

enthält, worin R ein Wasserstoffatom oder ein $C_1$-$C_8$ Alkylrest ist.

6. Verwendung der nach Anspruch 1 erhaltenen Polymeren (I), gegebenenfalls in Mischung mit anderen Polymeren, zur thermoplastischen Verarbeitung zu Formkörpern
mit der Maßgabe, daß (I) keine Struktureinheiten der Formel

$$\begin{array}{l} -CH_2-\underset{|}{C}HR- \\ \qquad\;\; CN \end{array}$$

enthält, worin R ein Wasserstoffatom oder ein $C_1$-$C_8$-Alkylrest ist.

## Claims

1. A process for preparing a polymer which has an average molecular weight (weight average $M_w$) of from 5,000 to 2,000,000 and which contains in copolymerized form structural units of the general formula (I) :

$$\begin{array}{l} -CH_2-\underset{|}{C}R^1- \\ \quad\;\; Ar-(CH_2-O-PPE)_n \end{array} \qquad (I)$$

where $R^1$ is H or $C_1$-$C_8$-alkyl, Ar is unsubstituted or alkyl- or aryl-substituted aryl of from 6 to 14 carbon atoms, PPE is a substituted or unsubstituted poly(phenylene ether) radical of $M_w$ from 1,000 to 90,000, and n is an integer from 1 to 3, which comprises reacting a polymer which contains in copolymerized form structural units of the general formula (II) :

$$\begin{array}{l} -CH_2-CR^1- \\ \qquad\quad | \\ \qquad\quad Ar-(CH_2-Cl)_n \end{array} \qquad (II)$$

where $R^1$, Ar and n are each as defined above, with a poly(phenylene ether) which contains terminal hydroxyl using one or more aprotic polar solvents which do not react with the reactant and one or more alkali metal carbonates at above 60 °C.

2. A process as claimed in claim 1, wherein PPE is poly(2,6-dimethyl-1,4-phenylene ether), Ar is phenylene, $R^1$ is hydrogen and n is 1.

3. A process as claimed in claim 1, wherein the solvent is N-methylpyrrolidone.

4. A process as claimed in claim 1, wherein the reaction is carried out at above 100 °C.

5. The use of a polymer (I) obtained as claimed in claim 1, for preparing a mixture with another polymer, with the proviso that (I) does not contain any structural units of the formula

$$\begin{array}{l} -CH_2-CHR- \\ \qquad\quad | \\ \qquad\quad CN \end{array}$$

where R is hydrogen or $C_1$-$C_8$-alkyl.

6. The use of a polymer (I) obtained as claimed in claim 1 alone or mixed with another polymer, for thermoplastic processing into a shaped article, with the proviso that (I) does not contain any structural units of the formula

$$\begin{array}{l} -CH_2-CHR- \\ \qquad\quad | \\ \qquad\quad CN \end{array}$$

where R is hydrogen or $C_1$-$C_8$-alkyl.

## Revendications

1. Procédé de fabrication de polymères possédant des poids moléculaires moyens (moyenne en nombre $M_n$) de 5 000 à 2 000 000, qui contiennent des unités de structure de la formule générale (I)

$$\begin{array}{l} -CH_2-CR^1- \\ \qquad\quad | \\ \qquad\quad Ar-(CH_2-O-PPE)_n \end{array} \qquad (I)$$

en incorporation polymère, formule dans laquelle $R^1$ représente un atome d'hydrogène ou un radical alkyle en $C_1$ à $C_8$, Ar représente un radical aromatique comportant de 6 à 14 atomes de carbone, éventuellement substitué par des radicaux alkyle ou aryle, PPE représente un radical poly(éther phénylénique) éventuellement substitué, possédant un $M_n$ de 1 000 à 90 000 et n représente un nombre entier dont la valeur varie de 1 à 3, caractérisé en ce que l'on fait réagir des polymères qui contiennent, incorporées par polymérisation, des unités de structures de la formule générale (II) :

$$\begin{array}{l} -CH_2-CR^1- \\ \qquad\quad | \\ \qquad\quad Ar-(CH_2-Cl)_n \end{array} \qquad (II)$$

dans laquelle $R^1$, Ar et n possèdent les significations qui leur ont été attribuées ci-dessus, sur des poly(éthers phényléniques) contenant des radicaux hydroxyle terminaux, en recourant à l'emploi d'au moins un solvant aprotique, polaire, qui ne réagit pas sur les réactifs et d'au moins un carbonate d'alcali, à des températures supérieures à 60 °C.

2. Procédé suivant la revendication 1, caractérisé en ce que le PPE est le poly(éther 2,6-diméthyl-1,4-phénylénique) ; Ar représente un radical phénylène, $R^1$ représente un atome d'hydrogène et n est égal à 1.

3. Procédé suivant la revendication 1, caractérisé en ce que le solvant est la N-méthylpyrrolidone.

4. Procédé suivant la revendication 1, caractérisé en ce que l'on opère la réaction à des températures supérieures à 100 °C.

5. Utilisation des polymères (I) obtenus suivant la revendication 1 en vue de la préparation de mélanges à d'autres polymères, avec la condition que (I) ne contient pas d'unités de structure de la formule

$$-CH_2-\underset{CN}{\underset{|}{C}}HR-$$

dans laquelle R représente un atome d'hydrogène ou un radical alkyle en $C_1$-$C_8$.

6. Utilisation des polymères (I) obtenus selon la revendication 1, éventuellement en mélange à d'autres polymères, pour leur transformation thermoplastique en articles moulés, avec la condition que (I) ne contient pas d'unités de structure de la formule

$$-CH_2-\underset{CN}{\underset{|}{C}}HR-$$

dans laquelle R représente un atome d'hydrogène ou un radical alkyle en $C_1$ à $C_8$.